# EUROPEAN PATENT APPLICATION

(11) **EP 3 257 628 A1**
(43) Date of publication of application: **20.12.2017**
(21) Application number: 17175107.6
(22) Date of filing: 08.06.2017
(51) Int. Cl.: B24B 19/02, A63C 5/04, A63C 11/04, B24B 53/075, G05B 19/416

(54) **METHOD AND MACHINE FOR MACHINING THE UNDERSIDE OF A SKI**

(30) Priority: 14.06.2016 IT UA20164355
(71) Applicant: TECNOPOWER di Capelli Paolo, 29010 Pontenure, Piacenza (IT)
(72) Inventor: CAPELLI, Paolo, I-29010 Cadeo (Piacenza) (IT)
(74) Representative: Chimini, Francesco

(57) **Abstract**

The invention relates to a method and machine for machining the underside of a ski. The machine comprises a rotary grinding wheel driven by a respective first motor, a machining tool of the grinding wheel controlled by a second and a third motor, and a ski pulling group suitable to move the ski under the control of a respective fourth motor.

The machining method comprises the steps of selecting at least one pattern to be realized on the underside of the ski, generating from said pattern a position, speed and acceleration profile for controlling the first electric motor, to define, for each of the remaining electric motors, an electronic cam that links the position, speed and acceleration profile of each of the remaining electric motors to the position, speed and acceleration profile of the first electric motor, wherein each electronic cam is expressed by a family of polynomials.

## Description

The present invention relates to a method and a machine for machining the underside of a ski.

There are already known machines for machining the underside of skis, in particular providing a micro-grooving suitable to define the threads that promote the discharge of water droplets from below the skis, increasing the glide and thus improving the performance of the skier.

To realize such micro-grooving, these machines use a grinding wheel the outer surface of which is carved by means of chip removal with a diamond tool.

The ski is made to advance and press against the machined surface of the grinding wheel, so that the latter forms a succession of patterns on the underside of the ski according to a predetermined design.

An example of a carving procedure is described in EP1179391A2. According to this procedure, the grinding wheel is cut using a diamond tool in such a way as to create multistart helical threads which crisscross, thereby defining a pattern with multiple threads that will be reproduced on the underside of a ski when it is brought into contact with and moved with respect to the grinding wheel.

To carry out the machining of the grinding wheel with the diamond tool and the movement of the ski with respect to the grinding wheel, these machines are generally equipped with four electric motors: a first electric motor controls the rotation of the grinding wheel around its rotation axis; a second electric motor controls the translation of the tool along a direction parallel to that of the rotation axis of the grinding wheel; a third electric motor controls the translation of the tool along a direction orthogonal to that of the rotation axis of the grinding wheel; a fourth electric motor controls the advancement of the ski.

These electric motors are controlled by a programmed control unit for controlling the electric motors in order to realize the carving of the grinding wheel and thus the machining of the underside of the ski according to a predetermined design.

It is thus evident that the possibility of realizing micro-grooving with any design desired is limited, not only in the mechanical structure of the machine, but also in the precision with which the electric motors are controlled and, above all, synchronized.

The programming techniques of the control unit currently applied to machines for machining the underside of a ski are not able to offer the ski technician the possibility of realizing particularly sophisticated micro-groove designs, which could further improve the glide of the ski.

Therefore, it is the object of the present invention to provide a method and a machine for machining the underside of a ski allowing more sophisticated and complex patterns to be made than those obtainable with the current machines and techniques.

Said object is achieved by a method of machining the underside of a ski according to claim 1 and with a machine according to claim 12. The dependent claims describe preferred embodiments of the invention.

The features and advantages of the method and the machine according to the invention will, however, become evident from the description hereinafter of their preferred embodiments, provided by way of indicative and non-limiting examples, with reference to the accompanying figures, wherein:

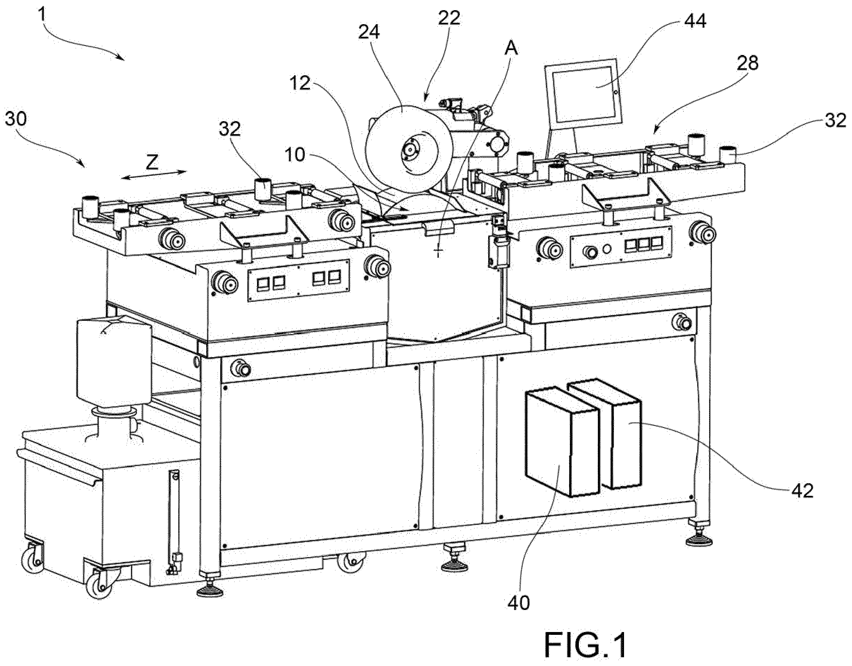

- figure 1 is a front perspective view of the machine for machining the underside of a ski according to the invention;

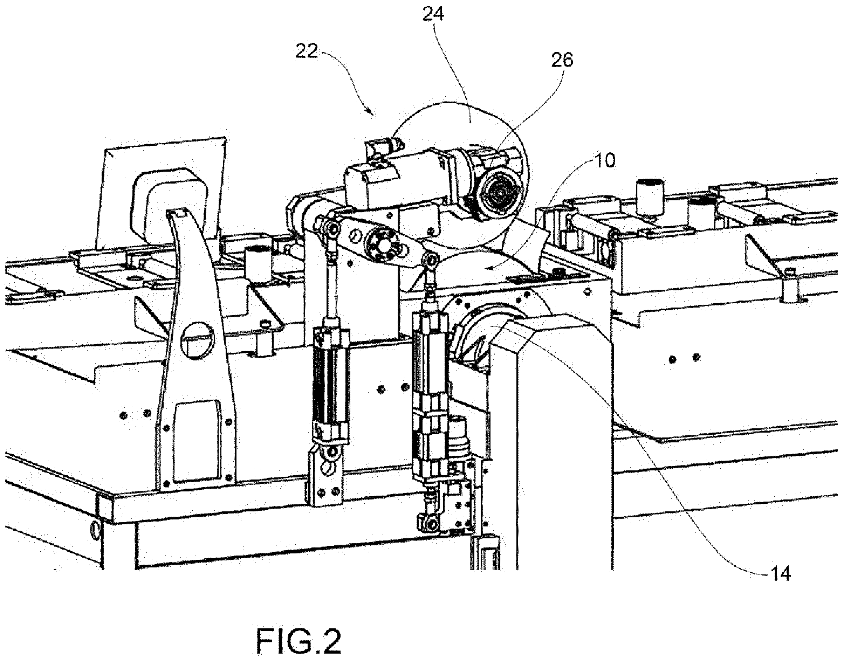

- figure 2 is a rear perspective view of part of the machine;
- figure 3 illustrates, in perspective view, the movement group of the carving tool of the grinding wheel;
- figures 4, 4a and 4b show, schematically, the lateral surface of the grinding wheel on which three respective patterns have been carved to be transferred to the underside of a ski, each formed by a combination of two profile structures;
- figure 5 illustrates schematically part of the underside of a ski on which the pattern corresponding to the surface of the grinding wheel of figure 4a has been imprinted; and
- figures 6-6d show several screenshots of the program that implements the machine-user interface.

In said drawings, at 1 is indicated collectively a machine for machining the underside of a ski according to the invention.

The machine 1 comprises a grinding wheel 10 having a cylindrical side surface 12 that defines a grinding wheel rotation axis A.

The grinding wheel 12 is placed in rotation about the rotation axis A by a first electric motor 14.

The machine further comprises a grinding wheel machining tool 16, for example a diamond tool, suitable to be placed in contact with the rotating grinding wheel 10 so as to create grooves on the cylindrical side surface 12.

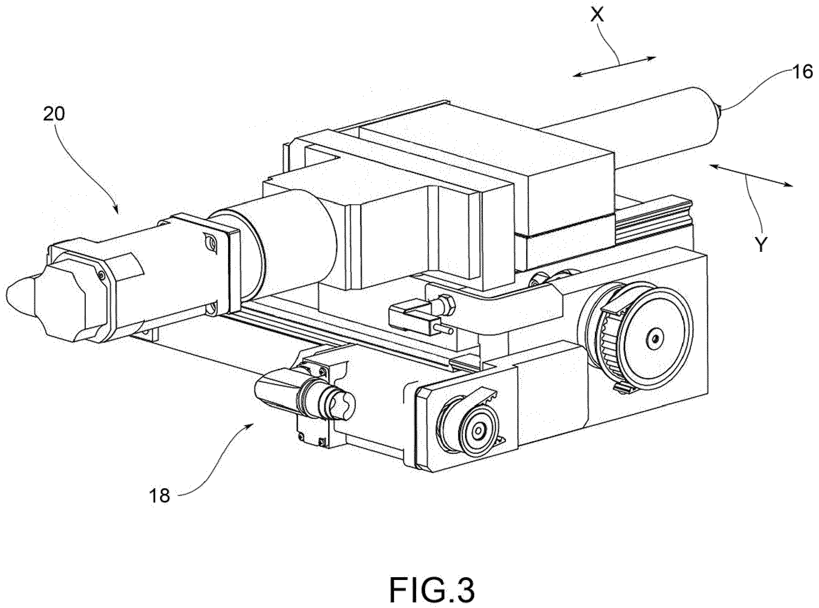

Figure 3 illustrates the tool 16 and its related movement group. The tool 16 is moved by a second electric motor 18. In particular, the second electric motor 18 is suitable to translate the tool 16 along a longitudinal tool translation axis Y parallel to the grinding wheel rotation axis A.

A third electric motor 20 is suitable to move the tool 16 along a transversal axis of penetration X, orthogonal to the grinding wheel rotation axis A;

The machine 1 further comprises a ski pulling group 22 suitable to move the ski along a ski advancement axis Z, parallel to the direction of longitudinal extension of the ski.

The ski pulling group 22 comprises a pulling wheel 24 facing the grinding wheel 10 and positionable above the ski on the side opposite the underside.

The pulling wheel 24 is set in rotation by a fourth electric motor 26 so as to move the ski along the direction of advancement Z at a speed corresponding to the tangential speed of the pulling wheel 24.

In one embodiment, the pulling wheel 24 is made of a deformable material, for example rubber, and contains a pressurized fluid that determines the profile of the outer surface of the wheel 24 that comes in contact with the ski.

The machine 1 is provided with means for adjusting the pressure of the pressurized fluid of the wheel 24, so as to modify, as will be described hereinafter, the profile of the outer surface of the wheel 24.

In one embodiment, the pulling group 22 further comprises an input roller group 28 and an output roller group 30.

In one embodiment, the roller groups 28, 30 are provided with automatic centering devices 32, for example of the pneumatic type, for centering the ski with respect to the ski advancement axis Z.

The machine 1 is a numerical control machine and is provided with a processing unit 40 programmed to generate, based on input data received from the operator and in accordance with the algorithms described below, machine instructions that are provided to a logic control unit 42, such as a PLC, responsible for automating the machine, and in particular the control of the actuation of the four electric motors.

The processing unit 40 is operatively connected to a user interface 44 through which an operator may select the pattern he/she intends to make on the underside of the ski from a pattern database, set any parameters to customize such pattern, modify the structure of the pattern, and generally configure the machine.

The processing unit 40 is programmed to generate multiprofile patterns, for example by the technique described in EP1179391A2.

The production of multiprofile patterns involves the creation of first threads, called "mother threads", which develop along helical paths around the rotation axis A of the grinding wheel, and second threads, called "splitting threads", which intersect with the mother threads.

The mother threads and the splitting threads create a pattern of threads having predetermined pitches and steps, and which define between them tooth hobs on the lateral surface of the grinding wheel 10. When the underside of a ski is placed in contact with the grinding wheel 10, these tooth hobs engage the underside of the ski and reproduce the micro-grooving of the corresponding design.

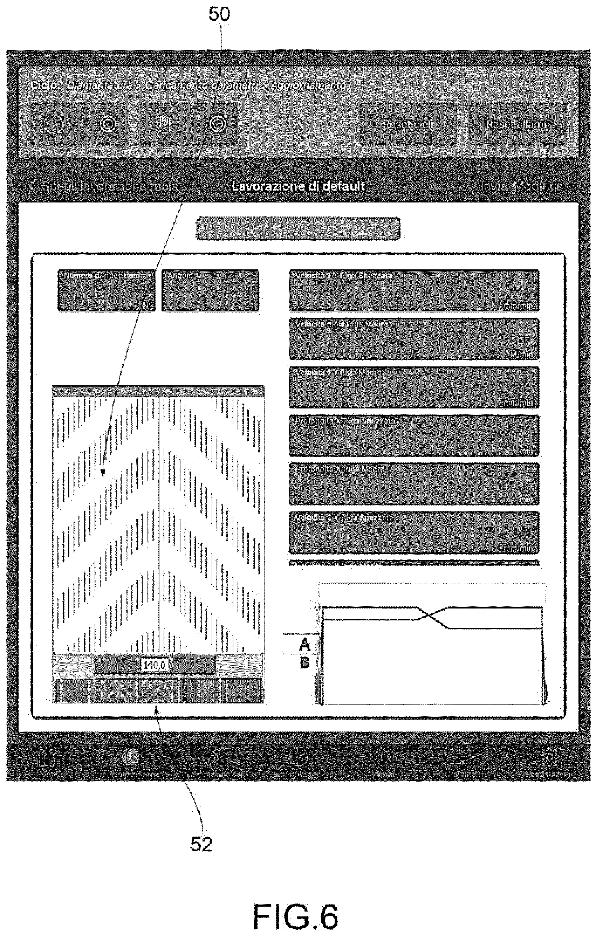

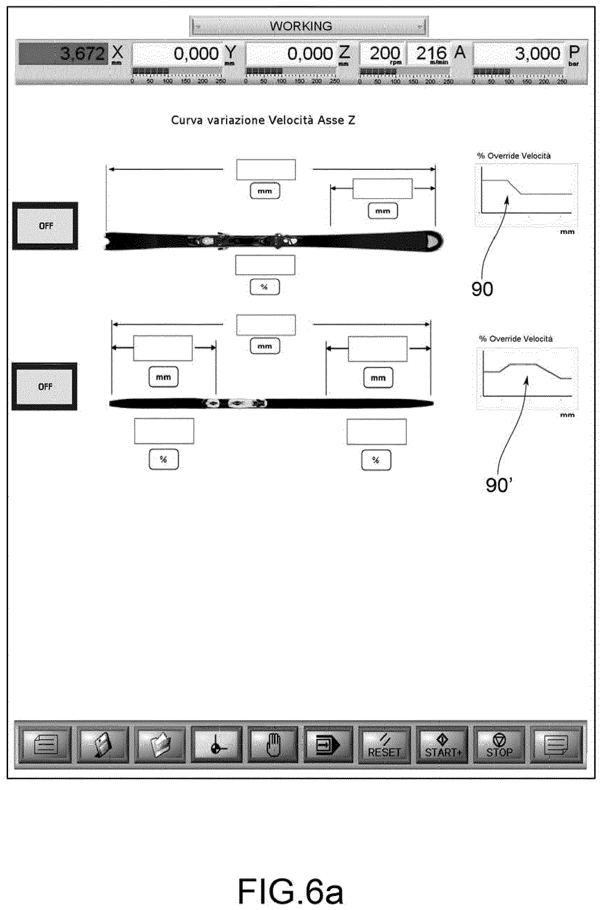

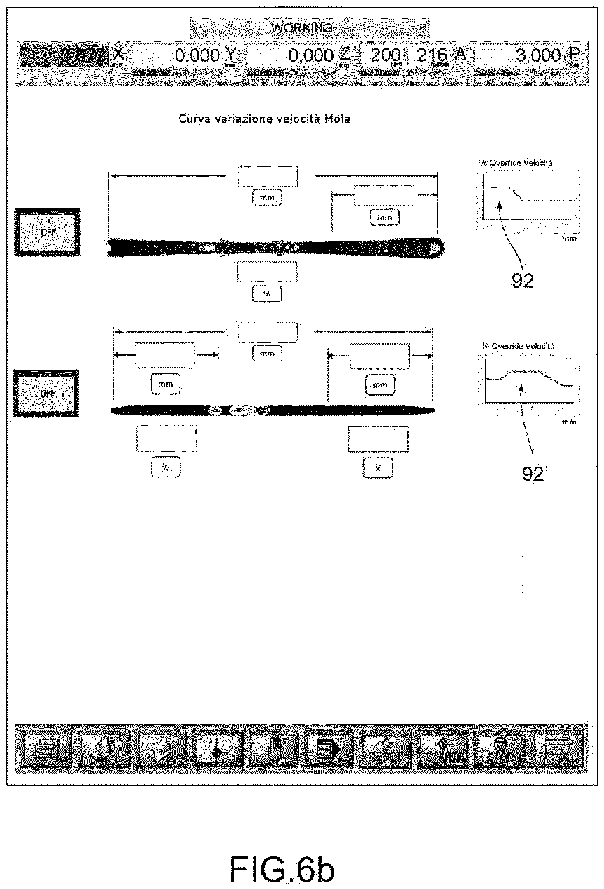

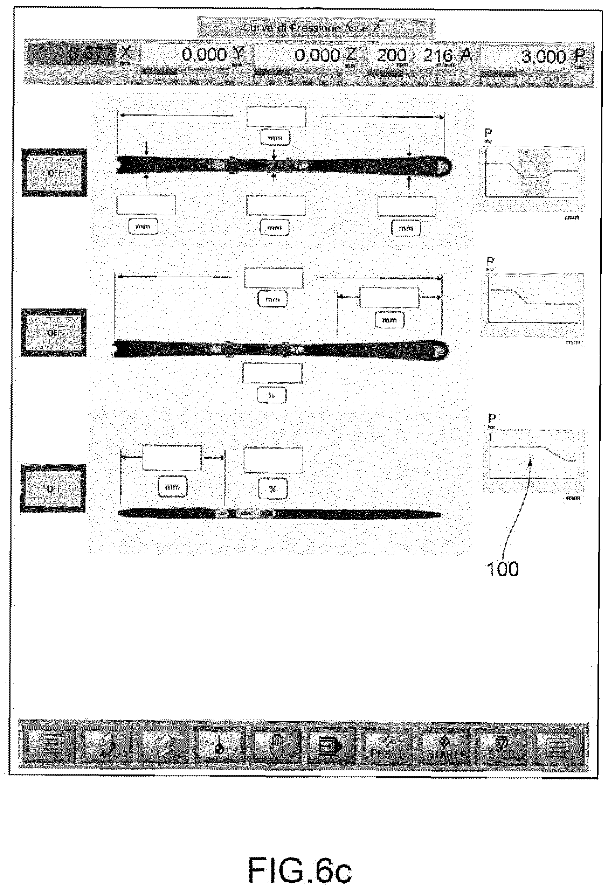

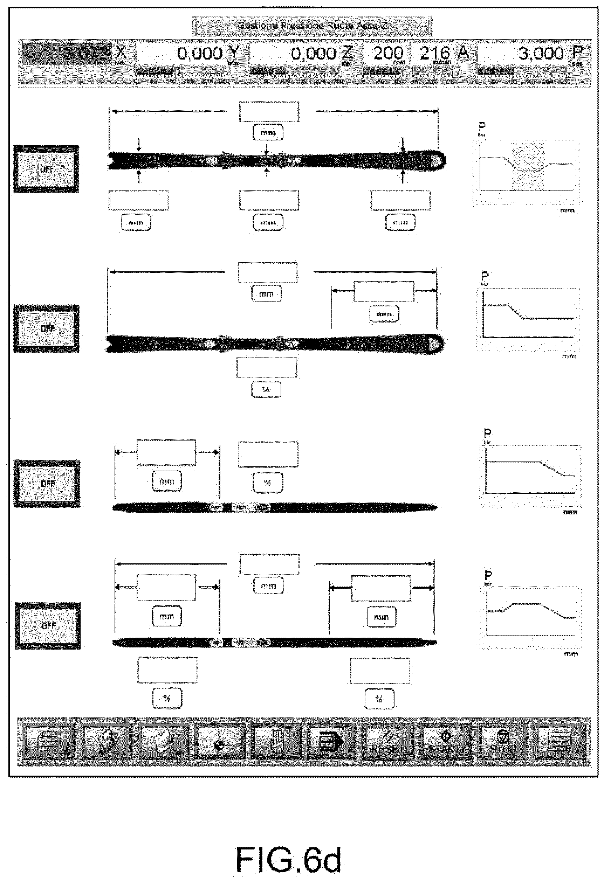

Now, in accordance with one aspect of the invention, after one selects at least one pattern to be made on the underside of the ski, for example, a pattern 50 chosen from a set 52 of patterns which the user interface presents to the operator (figure 6), the machining method of the underside of the ski provides for generating a profile from said pattern, i.e. a position, speed, and acceleration curve for controlling the first electric motor 14. This first electric motor 14 will be the "master" motor for controlling the other motors.

For each of the remaining electric motors 18, 20, 26, an electronic cam is defined that links the position, speed and acceleration profile of each of the remaining electric motors to the position, speed and acceleration profile of the first electric motor 14.

The term "electronic cam" is used here according to the known definition of the prior art that deals with automation systems employing multiple electric motors that must be synchronized with each other, and which substantially designates a transmission function that describes the position, speed and acceleration profile of an electric motor (slave) as a function of the position, speed and acceleration profile of another electric motor (master). In other words, an electric motor (slave) follows the movement of another electric motor (master) according to a law established by the electronic cam.

An electronic cam is usually described by a family of graphs, for example representative of the position, velocity and acceleration transmission function.

Now, it has been shown that, for the control of the motors of the machine for machining the underside of the skis, one obtains the desired result of improving the precision and synchronization of such motors by defining each electronic cam by means of a family of polynomials.

Using polynomials, the machine is able to convert positioning, speed and acceleration graphs of the electronic cams into a sequence of machine instructions that allow slave electric motors to follow the master electric motor 14 (the motor of the grinding wheel) with the desired precision.

In particular, the optimal result is obtained with eighth-degree polynomials.

In a preferred embodiment, the dependence of the slave electric motors on the master motor of the grinding wheel is as follows:
- the position, speed and acceleration profile of the second electric motor 18 depends directly on the position, speed and acceleration profile of the first electric motor 14;
- the position, speed and acceleration profile of the third electric motor 20 depends directly on the position, speed and acceleration profile of the second electric motor 18;
- the position, speed and acceleration profile of the fourth electric motor 26 depends directly on the position, speed and acceleration profile of the first electric motor 14.

Such a technique of controlling the electric motors makes it possible to produce patterns not obtainable with conventional programming techniques.

In particular, it is possible to produce a pattern by combining multiple profile structures, i.e., a pattern wherein at least one second profile structure is embedded in a first profile structure without the second structure altering the function of the first structure.

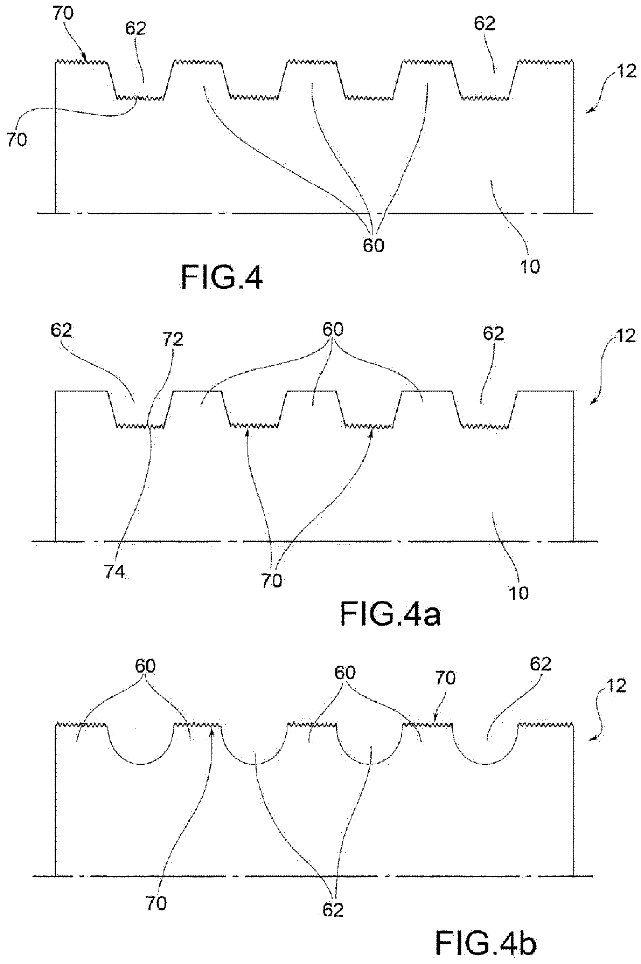

For example, with reference to figures 4-4b, it is possible to produce a pattern wherein a first structure is selected corresponding to a first grooving adapted to form on the underside of the ski a plurality of first ridges 60 interposed by a plurality of first valleys 62.

The operator further selects a second structure corresponding to a second groove 70 adapted to form on the underside of the ski a plurality of second ridges 72 interposed by a plurality of second valleys 74.

The four electric motors are controlled in such a way as to produce the second grooving 70 on one or more of the first ridges 60 and/or in one or more of the first valleys 62 of the first grooving.

Figure 4 schematically shows the lateral surface 12 of the grinding wheel 10, wherein the first grooving is carved to form ridges 60 and valleys 62 of a certain width and height, for example, 40 µm. A second grooving 70, with a much finer step than the first and having a height, for example of 20 µm, is made on both the ridges and the valleys of the first grooving.

In the example of figure 4a, the second grooving 70 is made only in the valleys 62 of the first grooving.

In the example of figure 4b, the second grooving 70 is made only on the ridges 60 of the first grooving. In this case, the valleys of the first grooving, lacking the second grooving, may have a concave shape rather than flat.

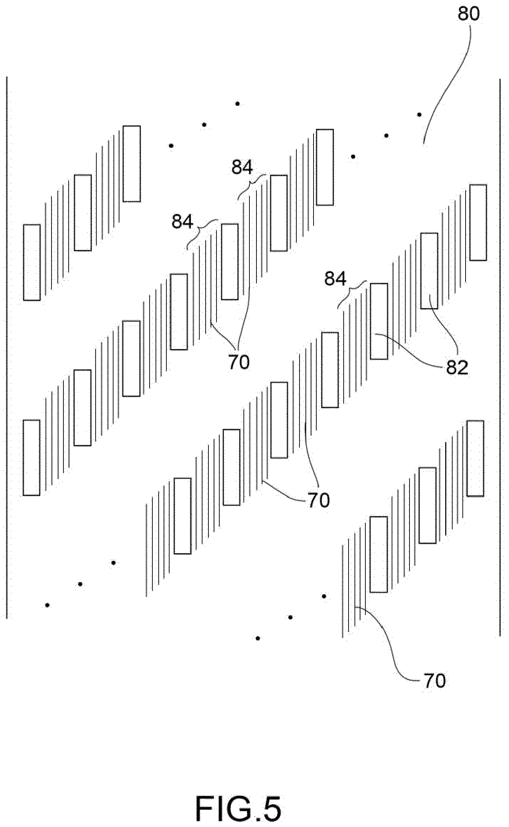

Figure 5 schematically shows a portion of the underside of a ski 80, wherein a pattern has been carved reflecting the carving of the grinding wheel shown in figure 4a. Grooves 82 are in fact highlighted which correspond to the first ridges 60, spaced by ridges 84, for example with a flat profile, corresponding to the first valleys 62. The second grooving 70 is engraved (complementarily) on each of such ridges 82.

Such a shape of the pattern is particularly effective during alpine skiing competitions, where the snow temperature is so variable along the track that a single grooving on the underside of the ski suitable to make the ski glide on one stretch of the track would not be as effective on other sections with different snow temperatures.

With the pattern of multiple structures described above, however, the different grooves created on different levels allow the maximum glide of the underside of the ski to always be obtained. For example, on an initial section of the track, where snow is frozen, the second grooving 70 made on the ridges of the first pattern is effective; on an end section of the track where the snow is wet, the valleys, or grooves, 82 of the first grooving are effective.

In one embodiment, the first three electric motors are controlled in such a way as to affect the lateral surface of the grinding wheel with a continuous action of the tool. Also, this method of carving of the grinding wheel, which requires very high precision in the control of the motors so that the second pattern does not damage the first pattern, is made possible by programming with electronic cams defined by polynomials.

In one embodiment, the pattern of multiple structures made on the lateral surface of the grinding wheel is transferred to the underside of the ski in a single pass of the ski on the machine. This results in a drastic reduction in machining time of the underside of the ski and prevents subsequent passes from altering the structure made with a first pass.

In one embodiment, the user interface permits, after selecting a type of pattern 50 to be carved on the underside of the ski, to select also at least one geometric characteristic of such pattern in a predetermined range of values.

For example, the value of the following characteristics of the pattern may be selected: angle of inclination of the splitting, length of the pattern, length of the distance between two consecutive patterns, depth of the pattern profile, step of the pattern profile, the number of mother-line profile threads, the number of threads of the splitting line profile. Depending on the value of these parameters, the processing unit recalculates the polynomials of the position, speed and acceleration curves of the first electric motor, and the polynomials of the electronic cams of the other electric motors.

In a further embodiment, the user interface provides the operator with the possibility to create a new pattern with a simple drawing tool, for example, by modifying a base pattern as desired. The processing unit is programmed so as to break up the new pattern into portions of the pattern stored in the pattern database for which the control polynomials of the electric motors are already known.

In other words, the database accessible from the processing unit contains an archive of "macros", each corresponding to a portion of the pattern, which may be combined to create endless patterns.

The processing unit is moreover programmed to generate any connection portions between the portions of the pattern to be connected, for example by interpolation.

In accordance with one embodiment, the machine is equipped with sensors and transducers suitable to detect the current diameter of the grinding wheel, the geometrical characteristics of the tool, the pressure of the ski pulling wheel, and other quantities that may affect the machining on the underside of the ski.

In particular, in the step of creating on the lateral surface of the grinding wheel at least one mother thread and of at least one splitting thread that intersects the mother thread, the angle of inclination of the splitting thread is calculated in real time during the carving of the side wall of the grinding wheel as a function of the diameter of the grinding wheel.

Furthermore, in the step of creating on the lateral surface of the grinding wheel at least one mother thread and least one splitting thread that intersects with the mother thread, the difference between the rotation speed of the grinding wheel during the creation of the mother thread and the rotation speed of the grinding wheel during the creation of the splitting thread is calculated in real time as a function of the diameter of the grinding wheel.

In accordance with one embodiment, the procedure for machining the underside of the ski also takes into account the size and shape of the ski, and, in particular, some parameters of the machining procedure vary according to the portion of the ski that is in contact with the grinding wheel.

For example, before machining is started, the values of the length and/or width of the front, center and rear portions of a ski to be subjected to machining on its underside (figures 6a-6d) are provided to the machine. In one embodiment, the first electric motor 14 and/or the fourth electric motor 26 is controlled so as to vary its speed at the passage over the grinding wheel from one such portion of the ski to another. In this way, the number of patterns per unit length between one ski portion and another is differentiated.

Figures 6a and 6b show, for example, speed profiles 90, 90'; 92, 92' of the fourth and of the first motor for a ski for alpine skiing and a ski for cross-country skiing, respectively, as a function of the length of the skis and their portions.

In a further embodiment illustrated in the screenshot of figure 6c, the pressure exerted by the pulling wheel 24 on the ski varies, both as a function of the current diameter of the grinding wheel, and as a function of the portion of the ski subjected to machining. This pressure is controlled either to dynamically correct the pressure value per unit of surface depending on the width of the ski in order to have constant pressure, or to reduce the pressure in the tail of the ski in order to avoid, especially with cross-country skis, excessive wear on the underside, as is apparent, for example, from the pressure curve 100 of figure 6c, relating to cross-country skiing.

In a further embodiment illustrated in the screenshot of figure 6d, the profile of the pulling wheel in contact with the ski may also be modified according to the portion of the ski subjected to machining by controlling the pressure of the fluid present in the wheel. For example, one may go from a "saddle-shaped" profile that better distributes the pressure to the edges of the ski, to a concave profile, which concentrates the pressure on the central portion of the ski.

To the embodiments of the method and of the machine for machining the underside of the ski according to the invention, those skilled in the art may, to satisfy contingent needs, make modifications, adaptations and replacements of some elements with others that are functionally equivalent, without departing from the scope of the following claims. Each of the features described as belonging to a possible embodiment may be implemented independently by the other described embodiments.

## Claims

1. Method of machining the underside of a ski using a numerical control machine, where said machine comprises:
- a grinding wheel having a cylindrical side surface that defines a grinding wheel rotation axis (A);
- a first electric motor suitable to place the grinding wheel in rotation about said grinding wheel rotation axis (A) ;
- a grinding wheel machining tool suitable to be placed in contact with the grinding wheel in rotation so as to create a groove on said cylindrical side surface;
- a second electric motor suitable to move said tool along a longitudinal direction parallel to the grinding wheel rotation axis;
- a third electric motor suitable to move said tool along a transversal direction orthogonal to the grinding wheel rotation axis;
- a ski pulling group, suitable to move the ski along a direction of advancement parallel to the direction of longitudinal extension of the ski;
- a fourth electric motor suitable to actuate said ski pulling group,
the machining method comprising the steps of:
- selecting at least one pattern to be realized on the underside of the ski;
- generating from said pattern a position, speed and acceleration profile for the control of the first electric motor;
- defining, for each of the remaining electric motors, an electronic cam that links the position, speed and acceleration profile of each of the remaining electric motors to the position, speed and acceleration profile of the first electric motor;
wherein each cam is expressed by a family of polynomials.

2. Method according to the preceding claim, wherein:
- the position, speed and acceleration profile of the second electric motor depends directly on the position, speed and acceleration profile of the first electric motor;
- the position, speed and acceleration profile of the third electric motor depends directly on the position, speed and acceleration profile of the second electric motor;
- the position, speed and acceleration profile of the fourth electric motor depends directly on the position, speed and acceleration profile of the first electric motor.

3. Method according to claim 1 or 2, wherein the step of selecting an pattern comprises a first sub-step of selecting a first grooving of the underside of the ski suitable to form, in the underside of the ski, a plurality of first ridges alternating with a plurality of first valleys, and a second sub-step of selecting a second grooving suitable to form in the underside of the ski a plurality of second ridges alternating with a plurality of second valleys, and wherein the four electric motors are controlled in such a way as to realize the second grooving on one or more of the first ridges and/or in one or more of the first valleys of the first grooving.

4. Method according to the preceding claim, wherein the electric motors are controlled in such a way as to affect the lateral surface of the grinding wheel with a continuous action of the tool and to transfer the pattern made on the lateral surface of the grinding wheel to the underside in a single pass of the ski on the machine.

5. Method according to any of the preceding claims, wherein the step of selecting a pattern comprises a sub-step of selecting at least one geometric characteristic of said pattern in a range of predetermined values.

6. Method according to the preceding claim, wherein the step of selecting at least one geometric characteristic of the pattern comprises selecting the value of one or more of the following characteristics of the pattern: angle of inclination of the splitting, length of the pattern, length of the distance between two consecutive patterns, depth of the pattern profile, step of the pattern profile, the number of mother-line profile threads, the number of threads of the splitting line profile.

7. Method according to any of the preceding claims, comprising a step of creating on the lateral surface of the grinding wheel at least one mother thread and of at least one splitting thread that intersects with said at least one mother thread, and wherein the angle of inclination of said splitting thread is calculated in real time during the carving of the lateral wall of the grinding wheel as a function of the diameter of the grinding wheel.

8. Method according to any of the preceding claims, comprising a step of creating on the lateral surface of the grinding wheel at least one mother thread and of at least one splitting thread that intersects with said at least one mother thread, and wherein the difference between the rotation speed of the grinding wheel during the creation of the mother thread and the rotation speed of the grinding wheel during the creation of the splitting thread is calculated in real time as a function of the diameter of the grinding wheel.

9. Method according to any of the preceding claims, comprising a step of providing the length of the front, center and rear portions of a ski to be subjected to machining of the underside, and wherein the first electric motor and/or the fourth electric motor is controlled in such a way such as to vary its speed as it passes over the grinding wheel from one of said portions to another.

10. Method according to any of the preceding claims, wherein the ski pulling group comprises a presser member acting on the ski so as to keep the underside of the ski pressed against the grinding wheel, wherein before the machining of the underside of the ski are provided the dimensions of the length and/or width of the front, center and rear portions of the ski, and wherein the pressure exerted by said presser member on the ski is variable as a function of the ski portion subjected to machining.

11. Method according to the preceding claim, wherein said presser member comprises a wheel containing a fluid under pressure that determines the profile of the outer surface of said wheel, and wherein said profile is variable as a function of the ski portion subjected to machining by means of a control of the pressure of said fluid.

12. Numerical-control machine for machining the underside of a ski, comprising:
- a grinding wheel having a cylindrical side surface that defines a grinding wheel rotation axis (A);
- a first electric motor suitable to place the grinding wheel in rotation about said grinding wheel rotation axis (A) ;
- a grinding wheel machining tool suitable to be placed in contact with the grinding wheel in rotation so as to create a groove on said cylindrical side surface;
- a second electric motor suitable to move said tool along a longitudinal direction parallel to the grinding wheel rotation axis;
- a third electric motor suitable to move said tool along a transversal direction orthogonal to the grinding wheel rotation axis;
- a ski pulling group, suitable to move the ski along a direction of advancement parallel to the direction of longitudinal extension of the ski;
- a fourth electric motor suitable to actuate said ski pulling group; and
- a processing unit programmed to implement a method of machining the underside of the ski according to any of the preceding claims.
the machining method comprising the steps of:
- selecting at least one pattern to be realized on the underside;
- generating from said pattern a position, speed and acceleration profile for the control of the first electric motor;
- defining, for each of the remaining electric motors, an electronic cam that links the position, speed and acceleration profile of each of the remaining electric motors to the position, speed and acceleration profile of the first electric motor;
wherein each cam is expressed by a family of polynomials.

13. Ski, comprising a underside on which are formed:
- a first grooving comprising a plurality of first ridges alternating with a plurality of first valleys; and
- a second grooving comprising a plurality of second ridges alternating with a plurality of second valleys, wherein the second grooving is formed on one or more of the first ridges and/or in one or more of the first valleys of the first grooving.
